# EUROPEAN PATENT SPECIFICATION

(11) **EP 3 457 725 B1**
(45) Date of publication and mention of the grant of the patent: **09.12.2020**
(21) Application number: 17191656.2
(22) Date of filing: 18.09.2017
(51) Int. Cl.: H04W 4/18

(54) **METHOD FOR DATA GATHERING, TRANSFORMATION AND DELIVERING FROM ONE SMART DEVICE TO ANOTHER SMART DEVICE**
VERFAHREN ZUR DATENSAMMLUNG, -TRANSFORMATION UND -BEREITSTELLUNG VON EINER INTELLIGENTEN VORRICHTUNG AN EINE ANDERE INTELLIGENTE VORRICHTUNG
PROCÉDÉ DE COLLECTE DE DONNÉES, DE TRANSFORMATION ET DE DISTRIBUTION D'UN DISPOSITIF INTELLIGENT VERS UN AUTRE DISPOSITIF INTELLIGENT

(43) Date of publication of application: 20.03.2019
(73) Proprietor: Vestel Elektronik Sanayi ve Ticaret A.S., 45030 Manisa (TR)
(72) Inventor: DÖNER, Cagdas, 45030 Manisa (TR)
(74) Representative: Kehl, Ascherl, Liebhoff & Ettmayr Patentanwälte Partnerschaft mbB

(56) References cited:
- US-A1- 2008 148 160
- US-A1- 2014 237 516
- PETER HUTTERER ET AL: "Lightweight user interfaces for watch based displays", ADVANCES IN ONTOLOGIES, AUSTRALIAN COMPUTER SOCIETY, INC, P.O. BOX 319 DARLINGHURST, NSW 2010 AUSTRALIA, 30 January 2005 (2005-01-30), pages 89-98, XP058194162, ISSN: 1445-1336 ISBN: 978-1-920682-36-1
- WAX DAVID B ET AL: "Ventilator Data Extraction with a Video Display Image Capture and Processing System", JOURNAL OF MEDICAL SYSTEMS, PLENUM PUBLISHING CO, NY, USA, vol. 41, no. 6, 20 May 2017 (2017-05-20), pages 1-3, XP036249612, ISSN: 0148-5598, DOI: 10.1007/S10916-017-0751-2 [retrieved on 2017-05-20]

## Description

The present invention refers according to claim 1 to a method for gathering a data set from application data of a first device and for transferring the gathered data set to a second device.

### Background of the Invention

The prior art document "Lightweight user interfaces for watch based displays" by P. Hutterer et al., published on 30-01-2005, describes a prototype for a new watch which contains only a display, limited processing capability and no input devices. Bluetooth is used to communicate with an external device that performs the processing. Prior art document US20150113553 discloses in one embodiment, a media delivery system including a television, a smart phone and a smart watch comprising an ad hoc communication network. The smart phone is employed as remote control. In one implementation, the smart phone controls the television directly. In another implementation, the smart phone controls the television through the smart watch.

Prior art document US8725842 discloses a smart watch. The smart watch includes a band unit, a network unit, a display unit and a control unit. The band unit is configured to be worn on a user's wrist. The smart watch includes a band unit that is capable of being worn on a user and includes a wrist band layer disposed on the band unit, an image capture device disposed on the band unit, a power source coupled to the image capture device, a memory coupled to the image capture device, and a motion detector coupled to the memory.

Smart watches are companion devices for mobile phones (smartphones) and created to make users follow up and take action for their calls, messages and other notifications. All of the events handled in smart watches are notification based. If a user wants to gather information from/in an app which is not notification oriented, it will not be possible.

In smart watch and mobile phone interaction, there is only notification based progress possible. In such kind of mechanisms, a mobile phone system service gets ability of following notifications and passing it to the smart watch over Bluetooth or WIFI like protocols. But problem occurs with respect to applications which do not output notifications the user wants to get notified about.

### Object of the Invention

Thus, it is the object of the present invention to provide more comfort respectively more information for users of smart watches.

### Description of the Invention

The before mentioned object is solved by a method for gathering a data set from application data, wherein the application data refers to an application running on a first device, and for transferring the gathered data set to a second device for outputting information represented by the data set according to claim 1. The inventive method preferably comprises at least the steps:
Executing an application by means of a first device, in particularly a smart phone, gathering application data representing at least one pre-defined field by means of a gathering and transformation means, wherein the application data is fetched from a frame buffer or generated by taking a screen shot of the user interface, transform the application data into a data set, wherein the application data is processed by the gathering and transformation means, in particularly an optical character recognition process, for extracting information, wherein the transformation means outputs the information as the data set, transferring the data set to a second device, and outputting the information represented by the data set by means of an output unit of the second device.

This solution is beneficial since information provided by applications which do not output notifications dedicated to be transferred to smart watches can be gathered and transferred to the smart watch. Thus, also information of restricted applications can be outputted via a smart watch. Therefore, the user has much more comfort and the applications running on the smart phone do not need to output notifications, this causes less application complexity.

Thus, any app that is selected by user will be able to send data to the smart watch even the app has no raised notification or API to program. I.e. a user would like to get bus or train status from a specific application. But there is no notification or API to control and gather the app data that is only shown on the app User Interface (UI).

In the present invention, the term "smart device" defines a device that has an output means for outputting information, in particularly a display, an internet connectivity, in particularly Wi-Fi and/or GSM, for exchanging data and preferably an interface for inputting data by a user. A smart phone or smart watch or tablet PC, etc. are smart devices. The first device is preferably a smart phone respectively mobile phone and the second device is preferably a watch, in particularly a smart watch.

Further preferred embodiments of the present invention are subject-matter of the dependent claims and/or of the following specification parts.

According to a preferred embodiment of the present invention the application is executed as background process while the application data is fetched from the frame buffer. This embodiment is beneficial since the user can interact with the first device without recognizing the background process.

The application is displayed according to a further preferred embodiment of the present invention while the application data is generated by taking a screen shot of the user interface. Thus, a screen shot can be taken in dependency of a predefined criteria in case the user interface of the application is displayed. The predefined criteria can be lapsed time between the last screen shot and/or a modification of the user interface of the application. This embodiment is beneficial since information displayed by any application can be gathered.

The gathering and transformation means is according to another embodiment of the present invention an application or a background process or executed by a virtual machine of the first device. It is further possible that the step of gathering and transforming application data is carried out by a background process or executed by means of a virtual machine. This embodiment is beneficial since the step of gathering and transforming application data does not require significant computing power, thus it can be carried out timewise or constantly.

The second device executes according to a further preferred embodiment of the present invention an output means for outputting the information represented by the data set via the output unit, wherein the output means receives at least indirectly (e.g. via a further application) or directly data from the gathering and transformation means. This embodiment is beneficial since the output means preferably has a user interface displayed by the output unit, in particularly a display of a smart watch.

The output means is an application or belongs to an application, in particularly the control application, or is a background process or is executed by a virtual machine of the second device. This embodiment is beneficial since the output means can be preinstalled or downloaded to the second device. It is further possible that the output means is automatically installed in case the first device is connected to the second device and in case the first device executes the control application.

Application data of multiple applications differing from each other is gathered and transferred to the second device. This embodiment is beneficial since the user comfort increases since the smart watch can be used to output information relating to different sources.

The gathering and transformation means provides a user interface or is linked to a user interface, wherein the user interface comprises a registering means for registering multiple applications and/or a field defining means for defining information to be gathered from the respective registered application. It is alternatively possible that the gathering and transformation means provides the transformed data to a control application, wherein the control application provides a user interface, wherein the user interface comprises a registering means for registering multiple applications and/or a field defining means for defining information to be gathered from the respective registered application. The output means, which is preferably executed by the second device, and the control application are preferably setting up an encrypted data transfer path.

The field defining means allows according to a further embodiment of the present invention at least setting up of one identifier field or multiple identifier fields and one variable field or multiple variable fields. This embodiment is beneficial since the desired information can be selected or defined in flexible manner.

The field defining means provides according to another embodiment of the present invention for at least two applications one or multiple pre-configured field settings, wherein at least two field setting are preferably differing from each other. This embodiment is beneficial since users do not have to configure the field settings individually. Thus, information provided by different applications can be utilized easily.

The gathering and transformation means provides according to a further preferred embodiment of the present invention at least two data sets representing a different number of pre-defined fields. This embodiment is beneficial since the gathering and transformation means preferably gathers a pre-defined set of data for each associated application.

The application preferably does not provide a data transfer means for transferring data to the second device. Thus, the gathering and transformation means preferably gathers information with respect to applications or only with respect to applications which do not provide dedicated data for outputting via a second device, in particularly a smart watch.

The application programming interface of the application is preferably fully restricted or the application prevents outputting of data for further processing. Thus, the application preferably prevents outputting of information which can be outputted via a user interface of the application or which is outputted via a user interface of the application.

The before mentioned object is also solved by a computer program product for executing of a method according to any of the proceeding claims.

Further benefits, goals and features of the present invention will be described by the following specification of the attached figure, in which exemplarily components of the invention are illustrated. Components of the devices, units and methods according to the invention, which match at least essentially with respect to their function can be marked with the same reference sign, wherein such components do not have to be marked or described multiple times with respect to said figure. In the following the invention is just exemplarily described with respect to the attached figure.

### Brief Description of the Drawings

- Fig. 1: shows interaction between a first device (smart phone) and a second device (smart watch) and
- Fig. 2: shows an example of a data set representing information with respect to train time table.

### Detailed Description of the Drawings

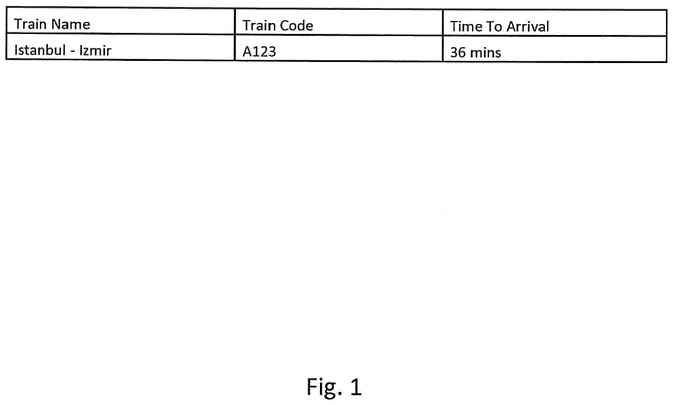

Figure 1 shows, a smart watch 101 and a smart phone 102 that is going to be connected to the smart watch 101 to get the user's requested data. Reference number represents 103 a preferred configuration request provided from smart phone 102 to smart watch 101 to declare what kind of data to be shown in smart watch screen. However, it is also possible to define respectively configure the data to be shown (data set) by means of a control application respectively mediator application. Reference number 104 identifies a ACK or NAK response message for the smart phone 102 request. There would be cases like requested string or image could not be fit in to the smart watch screen so user needs to be notified. Reference number 105 identifies the data that is processed by mobile phone background process or virtual machine and going to be transferred to the smart watch. Reference number 106 identifies the response of the mobile phone 102 from the smart watch 101 about the displaying status of the currently parsed information.

Thus, the smart phone 102 preferably executes a tiny virtual machine or a background process or application to make the desired (user defined) application run and get feeds, data or information that is only shown in application UI. The virtual machine (or a background process or application), in particularly gathering and transforming means, will have enough permission to make the user defined application run at the background and gather the user's requested information or data without the need of an UI.

As long as each application (in a virtual machine or not) needs to fill a frame buffer to display an Ul on the screen, the gathering and transformation means will fetch this frame buffer to catch user defined information. A frame buffer snippet is taken like a screen capture and the user defined fields are preferably transformed with an image to text operation like image processing. It is also possible to get frame buffer via a background process or application that denoted above.

With this approach, the user registers the desired application whom data will be gathered, via a mediator app or control application that is also running in the smartphone (on virtual machine or not) to help to the user about which data part need to be sent to the smart watch from the desired application. The mediator app or control app will have form like structures to take inputs from user to declare which part of the data would be parsed (gathered) from the desired application.

It is further possible that the output means and/or the control means provides an option for selecting respectively requesting of data sets of one or multiple applications. The gathering and transformation means preferably provides the data sets selected respectively requested via the output means or the control means. It is possible that the gathering and transformation means starts providing such data sets due to the request respectively selection.

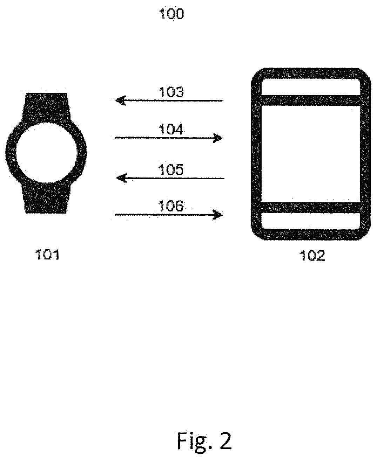

As an example, an application would have the text structure shown in fig. 2 in an app UI:
With a structure example like denoted in fig. 2, user will be able to gather each of the fields by denoting at least one identifier like:
{Istanbul - Izmir} X Y
Istanbul - Izmir string is an identifier in here and X and Y are the variables. User will highlight the identifiers (related with Istanbul - Izmir) and will expect to have variables in his/her smart watch. User will be also able to schedule a periodic and continuous event gathering on such app to demonstrate on his/her smart watch anytime of a day.

Another method to cover this problem is making the user defined application running each time before sending the data to the smart watch and taking a screen capture and again image processing it to convert data to text. Identifier and variables would be defined via mediator app respectively control application denoted like above. The control application or mediator application preferably communicates with the gathering and transforming means. Alternatively, the gathering and transformation means is part of the mediator application respectively control application.

Thus, the present invention refers to a method for gathering a data set from application data, wherein the application data refers to an application running on a first device, and for transferring the gathered data set to a second device for outputting information represented by the data set, at least comprising the steps: Executing an application by means of a first device, in particularly a smart phone, gathering application data representing at least one pre-defined field by means of a gathering and transformation means, wherein the application data is fetched from a frame buffer or generated by taking a screen shot of the user interface, transform the application data into a data set, wherein the application data is processed by the gathering and transformation means, in particularly an optical character recognition process, for extracting information, wherein the transformation means outputs the information as the data set, transferring the data set to a second device, and outputting the information represented by the data set by means of an output unit of the second device.

### List of reference numbers

- 101: smart watch
- 102: smart phone
- 103: configuration request
- 104: ACK or NAK message
- 105: data processed by smart phone
- 106: response of smart watch to smart phone

## Claims

1. Method for gathering a data set from application data, wherein the application data refers to an application running on a first device, and for transferring the gathered data set to a second device for outputting information represented by the data set, at least comprising the steps:
executing the application by means of the first device (102), wherein the first device is a smart phone,
gathering the application data representing at least one pre-defined field by means of a gathering and transformation means,
wherein the application data is fetched from a frame buffer,
transforming the application data into the data set,
wherein the application data is processed by the gathering and transformation means for extracting information,
wherein the transformation means outputs the information as the data set,
transferring the data set to the second device (101), wherein the second device is a smart watch, and
outputting the information represented by the data set by means of an output unit of the second device, wherein the output unit is a display of a smart watch,
**characterized in that**
the gathering and transformation means provides a user interface or is linked to a user interface, wherein the user interface comprises a registering means for registering multiple applications and a field defining means for defining information to be gathered from the respective registered multiple applications.

2. Method according to claim 1,
**characterized in that**
the application is executed as background process while the application data is fetched from the frame buffer.

3. Method according to claim 1
**characterized in that**
the application is displayed while the application data is generated by taking a screen shot of the user interface.

4. Method according to any of the preceding claims
**characterized in that**
the gathering and transformation means is an application or a background process or executed by a virtual machine of the first device (102).

5. Method according to any of the preceding claims
**characterized in that**
the second device (101) executes an output means for outputting the information represented by the data set via the output unit, wherein the output means receives data from the gathering and transformation means.

6. Method according to claim 5,
**characterized in that**
the output means is an application or a background process or executed by a virtual machine of the second device (101).

7. Method according to any of the preceding claims
**characterized in that**
application data of multiple applications executed by the first device (102) and differing from each other is gathered and transferred to the second device (101).

8. Method according to claim 1,
**characterized in that**
the field defining means allows at least setting up of one identifier field or multiple identifier fields and one variable field or multiple variable fields.

9. Method according to claim 8 ,
**characterized in that**
the field defining means provides for at least two applications one or multiple pre-configured field settings, wherein at least two field setting are differing from each other.

10. Method according to claim 9,
**characterized in that**
the gathering and transformation means provides at least two data sets representing a different number of pre-defined fields.

11. Method according to any of the preceding claims
**characterized in that**
the application does not provide a data transfer means for transferring data to the second device (101).

12. Method according to any of the preceding claims
**characterized in that**
the application programming interface of the application is fully restricted
or
the application prevents outputting of data for further processing
or
the application prevents outputting of information which can be outputted via a user interface of the application.

13. Computer program product comprising instructions which, when the program is executed by a computer, cause the computer to carry out the method according to any of the proceeding claims.

## Patentansprüche

1. Verfahren zum Erfassen eines Datensatzes aus Anwendungsdaten, wobei sich die Anwendungsdaten auf eine Anwendung beziehen, die auf einer ersten Vorrichtung läuft, und zum Übertragen des erfassten Datensatzes zu einer zweiten Vorrichtung zur Ausgabe von Informationen, die durch den Datensatz repräsentiert werden, wobei das Verfahren zumindest die Schritte aufweist:
Ausführen der Anwendung mittels der ersten Vorrichtung (102), wobei die erste Vorrichtung ein Smartphone ist,
Erfassen der Anwendungsdaten, die mindestens ein vordefiniertes Feld repräsentieren, mit Hilfe eines Erfassungs- und Transformationsmittels,
wobei die Anwendungsdaten aus einem Frame-Puffer geholt werden,
Transformation der Anwendungsdaten in den Datensatz,
wobei die Anwendungsdaten durch die Erfassungs- und Transformationsmittel zum Extrahieren von Informationen verarbeitet werden,
wobei das Transformationsmittel die Information als den Datensatz ausgibt,
Übertragen des Datensatzes an die zweite Vorrichtung (101), wobei die zweite Vorrichtung eine Smartwatch ist, und
Ausgeben der durch den Datensatz repräsentierten Information mittels einer Ausgabeeinheit der zweiten Vorrichtung, wobei die Ausgabeeinheit eine Anzeige einer Smartwatch ist,
**dadurch gekennzeichnet, dass**
das Erfassungs- und Transformationsmittel eine Benutzerschnittstelle bereitstellt oder mit einer Benutzerschnittstelle verbunden ist, wobei die Benutzerschnittstelle ein Registrierungsmittel zum Registrieren mehrerer Anwendungen und ein Felddefinitionsmittel zum Definieren von Informationen aufweist, die von den jeweiligen registrierten mehreren Anwendungen zu erfassen sind.

2. Verfahren nach Anspruch 1,
**dadurch gekennzeichnet, dass**
die Anwendung als Hintergrundprozess ausgeführt wird, während die Anwendungsdaten aus dem Frame-Puffer geholt werden.

3. Verfahren nach Anspruch 1
**dadurch gekennzeichnet, dass**
die Anwendung angezeigt wird, während die Anwendungsdaten durch Aufnahme eines Screenshots der Benutzerschnittstelle generiert werden.

4. Verfahren nach einem der vorstehenden Ansprüche
**dadurch gekennzeichnet, dass**
das Erfassungs- und Transformationsmittel eine Anwendung oder ein Hintergrundprozess ist oder von einer virtuellen Maschine der ersten Vorrichtung ausgeführt wird (102).

5. Verfahren nach einem der vorstehenden Ansprüche
**dadurch gekennzeichnet, dass**
die zweite Vorrichtung (101) führt ein Ausgabemittel zum Ausgeben der durch den Datensatz repräsentierten Information über die Ausgabeeinheit aus, wobei das Ausgabemittel Daten von dem Erfassungs- und Transformationsmittel erfasst.

6. Verfahren nach Anspruch 5,
**dadurch gekennzeichnet, dass**
das Ausgabemittel eine Anwendung oder ein Hintergrundprozess ist oder von einer virtuellen Maschine der zweiten Vorrichtung (101) ausgeführt wird.

7. Verfahren nach einem der vorstehenden Ansprüche
**dadurch gekennzeichnet, dass**
Anwendungsdaten mehrerer Anwendungen, die von der ersten Vorrichtung (102) ausgeführt werden und sich voneinander unterscheiden, erfasst und an die zweite Vorrichtung (101) übertragen werden.

8. Verfahren nach Anspruch 1,
**dadurch gekennzeichnet, dass**
die Felddefinitionsmittel erlauben zumindest die Einrichtung eines oder mehrerer Identifizierungsfelder und eines oder mehrerer variabler Felder.

9. Verfahren nach Anspruch 8,
**dadurch gekennzeichnet, dass**
das Felddefinitionsmittel für mindestens zwei Anwendungen eine oder mehrere vorkonfigurierte Feldeinstellungen bereitstellt, wobei sich mindestens zwei Feldeinstellungen voneinander unterscheiden.

10. Verfahren nach Anspruch 9,
**dadurch gekennzeichnet, dass**
das Erfassungs- und Transformationsmittel mindestens zwei Datensätze bereitstellt, die eine unterschiedliche Anzahl von vordefinierten Feldern repräsentieren.

11. Verfahren nach einem der vorstehenden Ansprüche
**dadurch gekennzeichnet, dass**
die Anwendung kein Datenübertragungsmittel für die Übertragung von Daten an die zweite Vorrichtung bereitstellt (101).

12. Verfahren nach einem der vorstehenden Ansprüche
**dadurch gekennzeichnet, dass**
die Programmierschnittstelle der Anwendung vollständig eingeschränkt ist
oder
die Anwendung die Ausgabe von Daten zur Weiterverarbeitung verhindert
oder
die Anwendung die Ausgabe von Informationen verhindert, die über eine Benutzerschnittstelle der Anwendung ausgegeben werden können.

13. Computerprogrammprodukt, das Anweisungen aufweist, die, wenn das Programm von einem Computer ausgeführt wird, den Computer veranlassen, das Verfahren nach einem der Verfahrensansprüche auszuführen.

## Revendications

1. Méthode pour rassembler un ensemble de données à partir de données d'application, dans laquelle les données d'application se réfèrent à une application s'exécutant sur un premier dispositif, et pour transférer l'ensemble de données rassemblé à un second dispositif pour sortir des informations représentées par l'ensemble de données, comprenant au moins les étapes suivantes :
exécution de l'application au moyen du premier dispositif (102), dans lequel le premier dispositif est un téléphone intelligent,
rassembler les données de la demande représentant au moins un domaine prédéfini à l'aide d'un moyen de collecte et de transformation,
dans lequel les données de l'application sont extraites d'une mémoire tampon de trame,
la transformation des données de l'application en un ensemble de données,
où les données de la demande sont traitées par les moyens de collecte et de transformation pour l'extraction des informations,
où le moyen de transformation produit les informations sous forme d'ensemble de données,
le transfert de l'ensemble de données vers le deuxième dispositif (101), le deuxième dispositif étant une montre intelligente, et
la sortie des informations représentées par l'ensemble de données au moyen d'une unité de sortie du deuxième dispositif, l'unité de sortie étant l'affichage d'une montre intelligente,
**caractérisé en ce que**
le moyen de collecte et de transformation fournit une interface utilisateur ou est lié à une interface utilisateur, dans lequel l'interface utilisateur comprend un moyen d'enregistrement pour enregistrer des applications multiples et un moyen de définition de champ pour définir les informations à collecter à partir de l'application multiple enregistrée respective.

2. Méthode selon la revendication 1,
**caractérisé en ce que**
l'application est exécutée en arrière-plan pendant que les données de l'application sont récupérées dans la mémoire tampon.

3. Méthode selon la revendication 1
**caractérisé en ce que**
l'application est affichée alors que les données de l'application sont générées en prenant une capture d'écran de l'interface utilisateur.

4. Méthode selon l'une des revendications précédentes
**caractérisé en ce que**
le moyen de collecte et de transformation est une application ou un processus d'arrière-plan ou exécuté par une machine virtuelle du premier dispositif (102).

5. Méthode selon l'une des revendications précédentes
**caractérisé en ce que**
le second dispositif (101) exécute un moyen de sortie pour sortir les informations représentées par l'ensemble de données via l'unité de sortie, dans lequel le moyen de sortie reçoit des données du moyen de collecte et de transformation.

6. Méthode selon la revendication 5,
**caractérisé en ce que**
le moyen de sortie est une application ou un processus d'arrière-plan ou exécuté par une machine virtuelle du second dispositif (101).

7. Méthode selon l'une des revendications précédentes
**caractérisé en ce que**
les données d'application de plusieurs applications exécutées par le premier dispositif (102) et différentes les unes des autres sont rassemblées et transférées au deuxième dispositif (101).

8. Méthode selon la revendication 1,
**caractérisé en ce que**
le moyen de définition des champs permet au moins la mise en place d'un champ d'identification ou de plusieurs champs d'identification et d'un champ variable ou de plusieurs champs variables.

9. Méthode selon la revendication 8 ,
**caractérisé en ce que**
le moyen de définition de champ prévoit pour au moins deux applications un ou plusieurs réglages de champ préconfigurés, dans lesquels au moins deux réglages de champ sont différents l'un de l'autre.

10. Méthode selon la revendication 9,
**caractérisé en ce que**
le moyen de collecte et de transformation fournit au moins deux ensembles de données représentant un nombre différent de champs prédéfinis.

11. Méthode selon l'une des revendications précédentes
**caractérisé en ce que**
l'application ne fournit pas de moyen de transfert de données pour transférer des données vers le deuxième appareil (101).

12. Méthode selon l'une des revendications précédentes
**caractérisé en ce que**
l'interface de programmation de l'application est entièrement restreinte
ou
l'application empêche la sortie de données pour un traitement ultérieur
ou
l'application empêche la sortie d'informations qui peuvent être sorties via une interface utilisateur de l'application.

13. Produit de programme informatique comprenant des instructions qui, lorsque le programme est exécuté par un ordinateur, font en sorte que l'ordinateur exécute la méthode selon l'une des revendications de la procédure.
